(19) Europäisches Patentamt
European Patent Office
Office européen des brevets

(11) **EP 4 712 391 A1**

(12) **EUROPEAN PATENT APPLICATION**

(43) Date of publication:
**18.03.2026 Bulletin 2026/12**

(21) Application number: **24306494.6**

(22) Date of filing: **12.09.2024**

(51) International Patent Classification (IPC):
**H04L 5/00** *(2006.01)*   **H04L 25/02** *(2006.01)*
**H04L 27/26** *(2006.01)*

(52) Cooperative Patent Classification (CPC):
**H04L 5/0048; H04L 5/0082; H04L 5/0091;**
**H04L 25/0226; H04L 27/2613;** H04L 5/0007;
H04L 5/0033; H04L 5/0044; H04L 5/006

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR**
**HR HU IE IS IT LI LT LU LV MC ME MK MT NL NO**
**PL PT RO RS SE SI SK SM TR**

(72) Inventors:
• **SIBEL, Jean-Christophe**
**35708 RENNES CEDEX 7 (FR)**
• **CORLAY, Vincent**
**35708 RENNES CEDEX 7 (FR)**
• **CIOCHINA, Cristina**
**35708 RENNES CEDEX 7 (FR)**

(74) Representative: **Plasseraud IP**
**104 Rue de Richelieu**
**CS92104**
**75080 Paris Cedex 02 (FR)**

(54) **FLEXIBLE USE OF REFERENCE SIGNAL PATTERNS IN A RADIOFREQUENCY COMMUNICATION**

(57)    A method, implemented by a sender node of a radiofrequency wireless communication system, said method comprising: sending to one or more receiver node, or receiving from said one or more receiver node, a signaling indicating an initialization of a procedure to insert in a plurality of data packets reference signals according to a plurality of reference signal patterns having respectively a plurality of distinct values of at least one parameter; inserting reference signals according to a first reference signal pattern in a first set of data packets ; sending, through a shared channel of said radiofrequency wireless communication system, said first set of data packets to said one or more receiver node of said radiofrequency wireless communication system ; inserting reference signals according to a second reference signal pattern in a second set of data packets, values of said at least one parameter being different between the first reference signal pattern and the second reference signal pattern ; sending, through said shared channel, said second set of data packets to said one or more receiver node.

Fig. 4

## Description

## Technical Field

The present disclosure relates to wireless communication systems and relates more specifically to wireless communication methods enabling to improve the mitigation of phase noise.

## Background Art

Phase noise is a physical phenomenon that occurs because of instabilities in the local oscillators of any wireless communication equipment, e.g. in base stations and in terminals (a.k.a. user equipment) of a wireless communication system.

In a wireless communication between a transmitter and a receiver, phase noise is introduced at both the transmitter side (when e.g. frequency translating, by means of one or more local oscillators, a baseband signal from a baseband frequency to a carrier frequency) and the receiver side (when e.g. frequency translating, by means of one or more local oscillators, a radiofrequency signal from a carrier frequency to a baseband frequency). The characteristics of the phase noise introduced depends on the respective characteristics of each local oscillator involved such that, for a same base station, the phase noise characteristics may vary when communicating with different terminals, since each terminal will use its own local oscillators with their own characteristics. Thus, the distortions differ among different equipments depending on the equipment vendor, the equipment series, but they also vary locally depending on the temperature, device aging, hand-holding pattern/orientation, instantaneous power level variation etc. Phase and/or amplitude distortions effects hence depend on the couple transmitter/receiver and may evolve in time during the communication.

Usually, the phase noise affecting data signals may be estimated at the receiver side by inserting reference signals at the transmitter side. Since the reference signals are known to both the transmitter and the receiver, the receiver can estimate long-term characteristics of the phase noise affecting the received reference signals, such as for example the autocorrelation of the reference signals and use the phase noise estimated for the reference signals to predict and correct the phase noise affecting the data signals.

The phase noise increases as the carrier frequency used to exchange radiofrequency signals increases. Next generation wireless communication systems target sub-terahertz carrier frequencies (e.g. below 300 gigahertz) and terahertz (THz) carrier frequencies (~1000 gigahertz) that are greater than the carrier frequencies used in current wireless communication systems. This increase in the carrier frequencies opens the room for considering higher data rates.

However, the constructors of the physical devices cannot keep up the pace with the wireless technology because the inner materials are not robust enough against the increase in the carrier frequency and it takes much time and much money to provide well-suited materials. The phase noise is therefore expected to drastically increase for next generation wireless communication systems

This might require increasing the number of reference signals required for an estimation of long-term characteristics of the phase noise, thereby limiting the achievable data rate for data signals. In addition, as the phase noise may drastically differ depending upon the different hardware used for each pair of emitter and receiver, an insertion of reference signal allowing to estimate long-term characteristics of the phase noise for any possible pair of emitter and receiver would result in inserting an extremely large number of reference signal, thereby drastically reducing the achievable data rate for data signals.

There is therefore a need for inserting reference signals that to estimate long-term characteristics of the phase noise using a limited amount of reference signals.

## Summary

This disclosure improves the situation.

It is proposed a method, implemented by a sender node of a wireless communication system, said method comprising: sending to one or more receiver node, or receiving from said one or more receiver node, a signaling indicating an initialization of a procedure to insert in a plurality of data packets reference signals according to a plurality of reference signal patterns having respectively a plurality of distinct values of at least one parameter; inserting reference signals according to a first reference signal pattern in a first set of data packets ; sending, through a shared channel of said radiofrequency wireless communication system, said first set of data packets to said one or more receiver node of said radiofrequency wireless communication system ; inserting reference signals according to a second reference signal pattern in a second set of data packets, values of said at least one parameter being different between the first reference signal pattern and the second reference signal pattern ; sending, through said shared channel, said second set of data packets to said one or more receiver node.

"A shared channel", may for example designate a channel of physical layer of a radiofrequency network belonging to a 3GPP standard where data packets are passed. A shared channel may for example be a PUSCH, PDSCH or PSSCH channel.

By "signaling", we designate a control message or information that aims at controlling the operations performed on the shared channel.

The use of two different reference signal patterns characterized by a different values of parameters allows, based upon the analysis of the reference signals received by the one or more receiver, to determine a long-term characteristic of the transmission from a sender to a receiver.

Meanwhile, the data packets where the reference signals are inserted according to different patterns are sent in the same shared channel. Thus, the adaptation of the reference signal pattern can be realized without requiring a complete re-initialization of the transmission. Therefore, the reference signal patterns can be flexibly selected during the communication to adapt to the actual end-to-end distortion and improve the correction of the signal.

In addition, the transmission of a signaling that indicates the initialization of a procedure to insert in a plurality of data packets reference signal patterns according to a plurality of reference signal patterns having different values of parameters allows either the sender node to initialize the procedure expected by the one or more sender nodes, or the one or more receiver nodes to be aware that such a procedure has been initiated. Therefore, both the sender and the one or more receiver are aware that the reference signals are inserted in a procedure that allows the determination of a long term characteristic of the transmission.

In another aspect, it is proposed a method, implemented by one or more receiver nodes of a radiofrequency wireless communication system, said method comprising: sending to a sender node, or receiving from said sender node, a signaling indicating an initialization of a procedure to insert in a plurality of data packets reference signals according to a plurality of reference signal patterns having respectively a plurality of distinct values of at least one parameter; receiving from said sender node of said radiofrequency wireless communication system and through a shared channel of said radiofrequency wireless communication system, a first set of received data packets, said first received set of data packets corresponding to a first set of data packets sent by the sender node, where said sender node has inserted reference signals according to a first reference signal pattern ; receiving from said sender node and through said shared channel, a second set of received data packets, said second received set of data packets corresponding to a second set of data packets sent by the sender node, where said sender node has inserted reference signals according to a second reference signal pattern, values of said at least one parameter being different between the first reference signal pattern and the second reference signal pattern.

In another aspect, it is proposed a telecommunication device adapted to implement at least a part of a method as defined here when the software is executed by a processor.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

In an embodiment, said at least one parameter comprise either a spacing between reference signal symbols, or a number of reference signal symbols.

By "a spacing between reference signal symbols", "at least one spacing between reference signals", or "different spacings", we designate at least one parameter defining a distance, in number of signals, between two consecutive reference signals in a reference signal insertion pattern. The at least one spacing may for example consist in a single spacing value if all the reference signals are regularly spaced, or a plurality of values or a parameter of a law defining the evolution of spacing values if the spacing between consecutive reference signals is variable in the pattern. Different spacings may be obtained for example by applying different spacing parameters to a same pattern type, or applying different pattern types that result in having different spacings between reference signals.

The at least one spacing may for example define a spacing between two consecutive reference symbols, a spacing between two consecutive groups of reference symbols, or a combination of a spacing between two consecutive groups of reference symbols, and between two consecutive symbols within a group.

By "a number of reference signal symbols", we designate a parameter that defines a number of reference signal symbols in a pattern. Using at least two patterns having different number of reference signal symbols also results in making the RS symbols density of the pattern vary: a pattern with more RS symbols will have a greater RS symbols density.

Using patterns of reference signals, wherein the at least one parameter whose value is different between the patterns comprises either a spacing between reference signal symbols or a number of reference signal symbols, provides an efficient solution to discover a long-term characteristic of the transmission, because the long-term characteristic can be evaluated for a plurality of different symbol densities. In particular, when the long-term characteristic is an autocorrelation of a phase noise, the autocorrelation can be estimated for different distances. Furthermore, the long-term characteristic can be estimated with a reduced overhead of the pilot sequence because at least one of the RS symbols patterns has a smaller RS symbols density.

In an embodiment, said signaling is sent or received in an existing control channel associated to said shared channel.

By "a control channel associated to said shared channel", we designate a control channel of L1 (physical layer) which is tied to the shared channel, and whose information allows the sender and receiver to control the operations performed in the shared channel. For example, a control channel associated to said shared channel may be :

- A PUCCH channel if the shared channel is a PUSCH channel (uplink communication) ;

- A PDCCH channel if the shared channel is a PDSCH channel (downlink communication) ;

- A PSCCH channel if the shared channel is a PSSCH channel (sidelink communication) ;

This eases the control of the procedure of insertion of reference signals, because the control channel already exists to control the operations performed in the shared channel.

In an embodiment, the method further comprises: creating a dedicated channel associated to said shared channel; using said dedicated channel to send or receive said signaling.

This allows using a control channel for controlling the procedure of insertion of the reference signals, even if no control channel exists initially.

In an embodiment, said signaling is inserted in said first set of data packets.

This allows using the existing shared channel to perform the signaling. Therefore no additional control channel is required.

In an embodiment, said signaling is sent or received in a subsequent shared channel of said radiofrequency wireless communication system, different from said shared channel.

This allows using an existing shared channel to perform the signaling. Therefore no additional control channel is required.

In an embodiment, said signaling is sent or received in a feedback channel.

This allows using an existing feedback channel to send or receive the signaling.

In an embodiment, said signaling is sent or received as an RRC signaling.

This allows sending or receiving the signaling in a higher layer than the physical layer

In an embodiment, said signaling comprises one or more descriptor of said first reference signal pattern.

This allows the receiver node to indicate what is the first reference signal pattern to use.

In an embodiment, the first reference signal pattern and the second reference signal pattern belong to a same type of reference signals pattern and said one or more descriptor of said second reference signal pattern comprise said at least one parameter.

This allows determining directly by the receiving node the parameters of the reference signal patterns it is aiming at using.

In an embodiment, the method further comprises sending to said one or more receiver node a further signaling indicating a switch from the first reference signal pattern to the second reference signal pattern.

This allows the receiver node to be aware of the change from the first reference signal pattern to the second reference signal pattern, and adapt the signal demodulation accordingly.

In an embodiment, switching from inserting reference signals according to a first reference signal pattern to inserting reference signals according to a second reference signal pattern is performed upon the reception by the sender node of said further signaling from said one or more receiver node.

This allows switching to inserting the reference signals according to a second reference signal pattern when it is signaled as appropriate by the receiver node, for example when the receiver node has received a sufficiently high number of data packets where the reference signal pattern is inserted to perform a sufficiently reliable analysis.

In an embodiment, said signaling indicating the initialization of the procedure is an integration of a descriptor of said first reference signal pattern in a field dedicated to the description of reference signal patterns in said procedure; said further signaling indicating the switch is a replacement of the descriptor of said first reference signal pattern by a descriptor of said first reference signal pattern in said field dedicated to the description of reference signal patterns in said procedure.

By "a field dedicated to the description of reference signal patterns in said procedure", we designate a field that is dedicated only to said procedure to insert in a plurality of data packets reference signal patterns according to a plurality of reference signal patterns having different spacings. Thus, the insertion of a descriptor of a reference signal pattern in said field indicates in the same time that the procedure is active, and what is the reference signal pattern to use. The field dedicated to the description of reference signal patterns in said procedure may be a predefined field, for example a dedicated field of a control channel.

Thus, a same field is used to initialize the procedure, and to switch between reference signal patterns. Various patterns can be described, and as many switches as needed can be performed this way. This therefore provides a convenient solution for managing the reference signals in the context of the procedure, while minimizing the amount of data required for the management of the procedure.

In an embodiment, switching from inserting reference signals according to a first reference signal pattern to inserting reference signals according to a second reference signal pattern is performed upon the elapsing of a duration since the start of inserting said reference signals according to a first reference signal pattern.

This allows switching reference signals when the duration of using the first reference signal pattern is considered as sufficient, for example when the first reference signal pattern has been inserted during a duration that is considered sufficient so that the characteristics that are determined using the first reference signal pattern can be determined efficiently.

In an embodiment, the method further comprises determining, based upon a first received reference signal pattern in said first set of received data packets, and a second received reference signal pattern in said second set of received data packets, one or more long-term characteristic of a transmission between the sender and the one or more receiver.

By "long-term characteristic of a transmission between the sender and the one or more receiver", we designate a quantity or a property that is reliable in average over a sufficiently large period of the considered transmission. Such a long-term characteristic is different from the instantaneous characteristics of the transmission, such as for example the instantaneous phase noise. Stated otherwise, by "long-term", it is understood statistical, e.g., average values, standard deviation, etc. The "long-term" characteristics are then not "short-term" characteristics, e.g., the instantaneous realization of the phase noise.

In an embodiment, said one or more long-term characteristic of the transmission relate to one or more of: phase noise ; non-linearities stemming from a high-power amplifier of the sender node ; a carrier frequency offset of the radiofrequency wireless communication system ; an autocorrelation of a variable measured in the time domain or in the frequency domain; a power spectral density of a variable measured in the time domain or in the frequency domain; a mean value of a variable measured in the time domain or in the frequency domain; a standard deviation of a variable measured in the time domain or in the frequency domain ; a $n^{th}$ moment of a variable measured in the time domain or in the frequency domain.

In an embodiment, the method further comprises: sending to said sender a signaling said one or more long-term characteristic of the transmission ; or determining, from said one or more long-term characteristic of the transmission, a third reference signal pattern ; and sending to said sender a signaling to switch to inserting reference signals according to said third reference signal pattern

This allows the sender to insert, for the subsequent transmissions of packets, reference signals according to a reference signal pattern that is well adapted to the characteristics of the transmission, for example a reference signal that has the lowest reference signal density allowing to achieve a defined performance of phase noise mitigation, so that phase noise can be mitigated with the desired performance with the smallest possible overhead.

## Brief Description of Drawings

Other features, details and advantages will be shown in the following detailed description and on the figures, on which:

**Fig. 1**

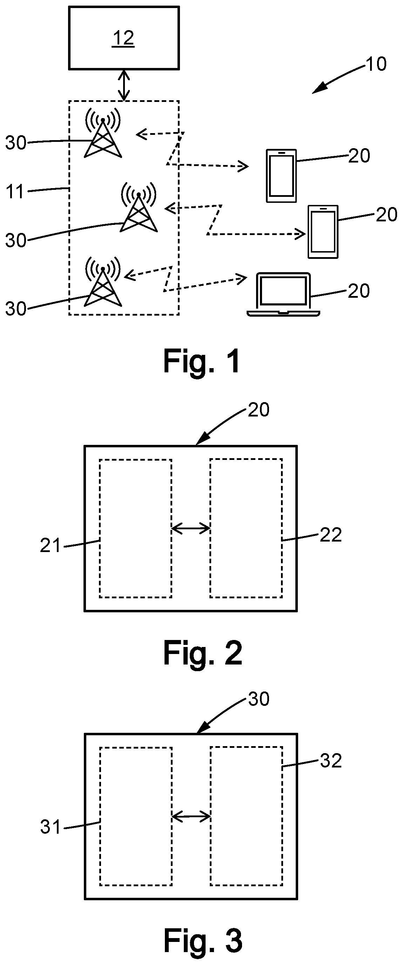

[Fig. 1] is a schematic representation of a radiofrequency wireless communication system according to an embodiment.

**Fig. 2**
[Fig. 2] is : a schematic representation of an exemplary embodiment of a terminal of the wireless communication system according to an embodiment.

**Fig. 3**
[Fig. 3] is a schematic representation of an exemplary embodiment of a base station of the wireless communication system according to an embodiment.

**Fig. 4**

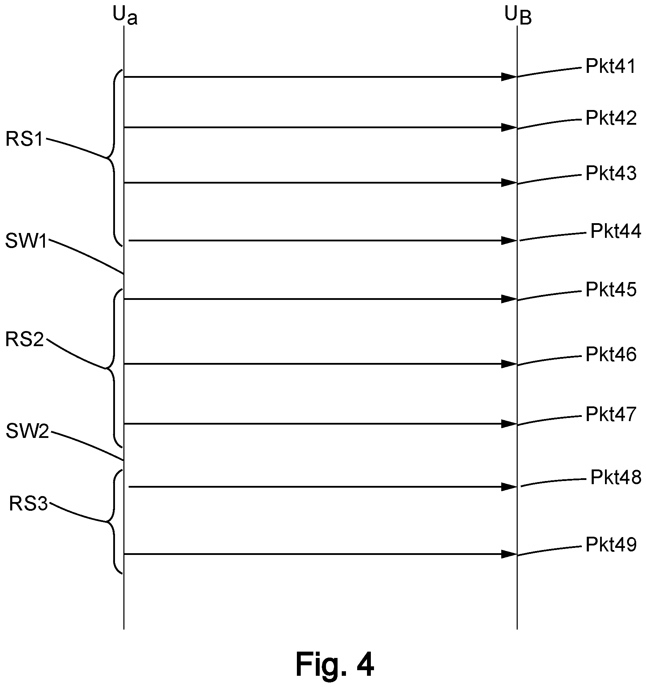

[Fig. 4] is a schematic representation of a communication between a sender node and one or more receiver node according to an embodiment.

**Fig. 5**

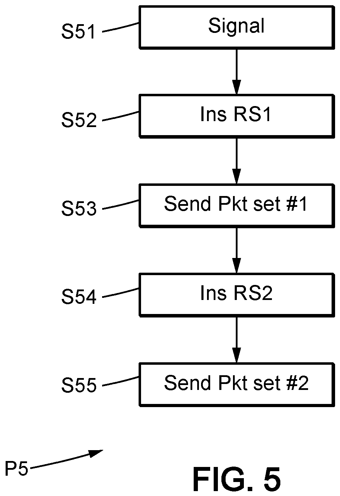

[Fig. 5] is a schematic representation of a method implemented by a sender node according to an embodiment.

**Fig. 6**

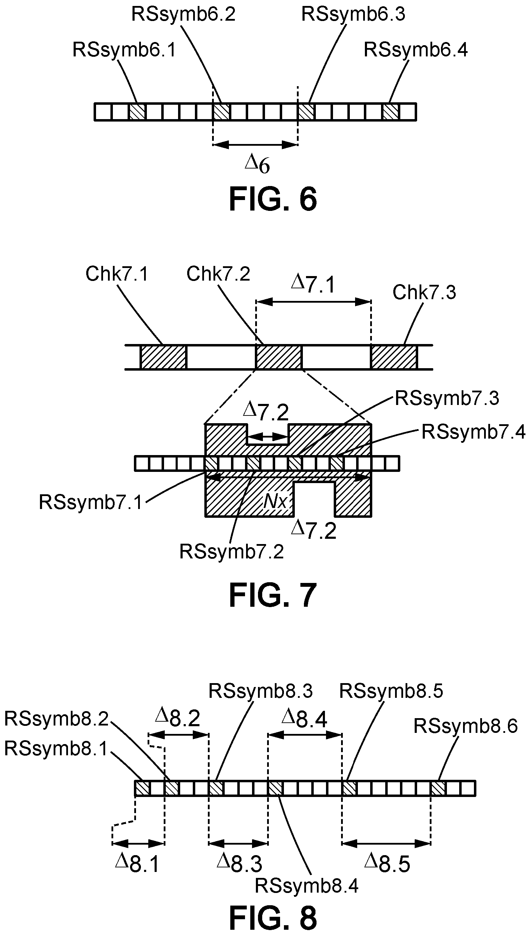

[Fig. 6] is an example of an UDRSP pattern that can be inserted used for inserting reference signals in data packets according to an embodiment.

**Fig. 7**
[Fig. 7] is an example of a CBRSP pattern that can be inserted used for inserting reference signals in data packets according to an embodiment.

**Fig. 8**
[Fig. 8] is a first example of a DDRSP pattern that can be inserted used for inserting reference signals in data packets according to an embodiment.

**Fig. 9**

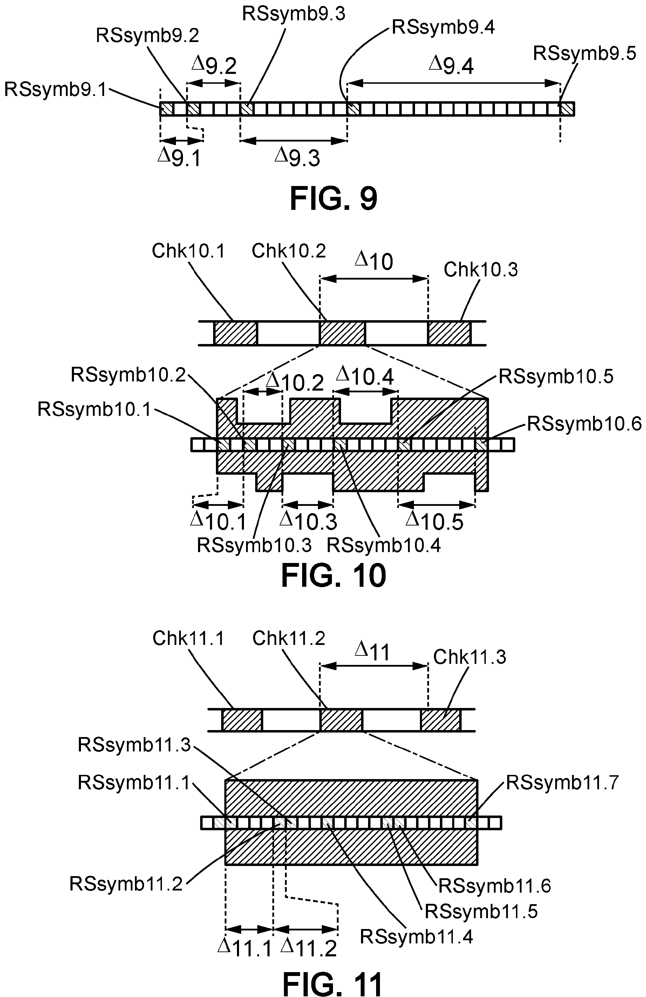

[Fig. 9] is a second example of a DDRSP pattern that can be inserted used for inserting reference signals in data packets according to an embodiment.

**Fig. 10**
[Fig. 10] is an example of a CBDDRSP pattern that can be inserted used for inserting reference signals in data packets according to an embodiment.

**Fig. 11**
[Fig. 11] is an example of a CBRRSP pattern that can be inserted used for inserting reference signals in data packets according to an embodiment.

**Fig. 12**

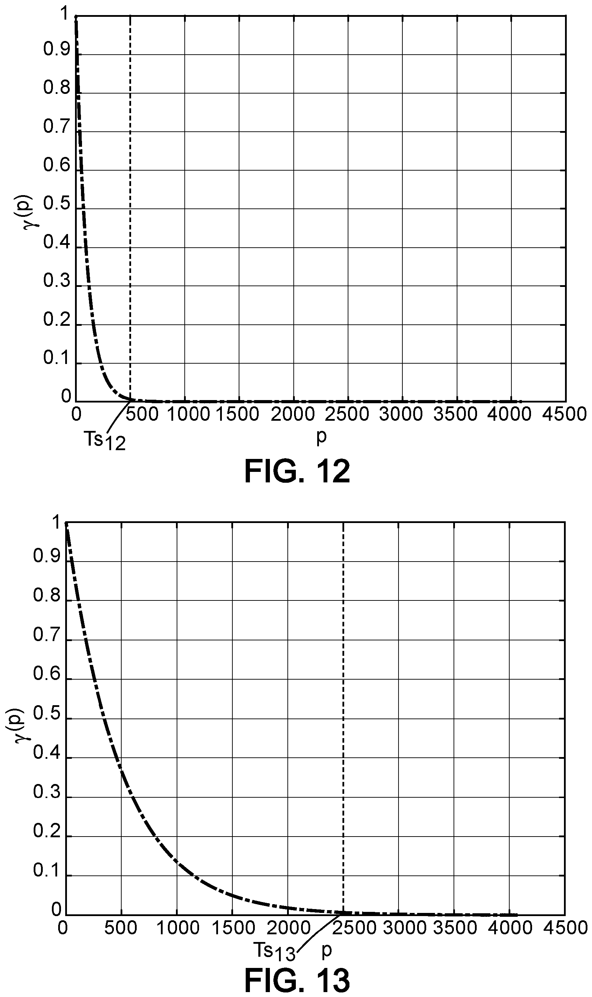

[Fig. 12] is first example of an autocorrelation function of the phase noise of a wireless communication that can be determined according to an embodiment.

**Fig. 13**

[Fig. 13] is second example of an autocorrelation function of the phase noise of a wireless communication that can be determined according to an embodiment.

**Fig. 14**

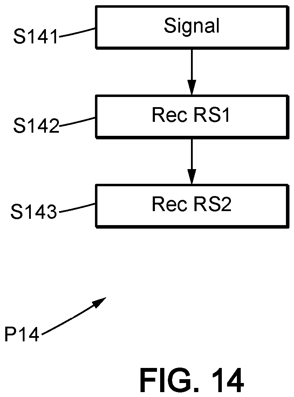

[Fig. 14] is a schematic representation of a method implemented by a receiver node according to an embodiment.

**Description of Embodiments**

Figure 1 represents schematically an exemplary embodiment of a radiofrequency wireless communication system 10. As illustrated by figure 1, the wireless communication system 10 comprises one or more terminals 20 (a.k.a. user equipment) and a radio access network, RAN, 11. The RAN 11 comprises one or more base stations 30. The terminals 20 are adapted to exchange data with the base stations 30 of the RAN 11 via wireless links established with said base stations 30. The RAN 11 is adapted to exchange data with a core network, CN, 12, in order to forward data received from terminals 20 to the CN 12 and to receive data from the CN 12 that is to be forwarded to terminals 20.

Each of the one or more base stations 30 and the one or more terminals 20 forms a node of the radiofrequency wireless communication system 10. As will be explained in more details hereinafter, the methods of the disclosure helps improving the communications between nodes of a radiofrequency wireless communication system such as the system 10. Even though the figure 1 represents a system with terminals and base stations, the methods of the disclosure may apply to any kind of communication between nodes of a radiofrequency wireless communication system, for example communications between terminals.

In each communication, a node that sends data is called "sender node" (or "transmitter node"), or simply "sender" or "transmitter". In the following, the terms "sender" and "transmitter" have the same meaning of designating a sender/transmitter node. Conversely, the node that receives the data is called "receiver node" or simply "receiver". In a communication between two nodes, the tow nodes can alternatively be sender and receiver.

For example, in a communication between a base station and a user equipment, the base station and the user equipment can both be alternatively sender and receiver. A communication from a base station to a user equipment is generally qualified of "downlink", while a communication from a user equipment to a base station is generally qualified of "uplink" and a communication between two user equipments generally qualified of "sidelink". Therefore, in a downlink communication, the sender node is a base station and the receiver node a user equipment or terminal, while in a uplink communication, the sender node is a user equipment or terminal, and the receiver node is a base station. In a sideling communication, both the receiver and the sender nodes are user equipments.

Figure 2 represents schematically an exemplary embodiment of a terminal 20. In this exemplary embodiment, the terminal 20 comprises a processing circuit 21. For instance, the processing circuit 21 comprises one or more processors and one or more memories. The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method P5 or P6.

The terminal 20 comprises also a wireless communication unit 22, coupled to the processing circuit 21, allowing said terminal 20 to exchange data on wireless links with the RAN 11, in the form of radiofrequency signals. The wireless communication unit 22 includes for instance a radiofrequency circuit comprising components (antenna(s), amplifier(s), local oscillator(s), mixer(s), analog and/or digital filter(s), etc.) considered known to the skilled person.

In other words, the processing circuit 21 and the wireless communication unit 22 of the terminal 20 form a set of means configured by software (specific computer program product) and/or by hardware (CPU, DSP, FPGA, ASIC, discrete electronic components, radiofrequency circuit, etc.) to implement all or part of the steps of the wireless communication method P5 or P6 which will be discussed hereinafter. Of course, the terminal 20 may also, in some cases, comprise other components which are not represented in the figures and not detailed herein.

Figure 3 represents schematically an exemplary embodiment of a base station 30. In this exemplary embodiment, the base station 30 comprises a processing circuit 31. For instance, the processing circuit 31 comprises one or more processors and one or more memories. The one or more processors may include for instance a CPU, a DSP, an FPGA, an ASIC, etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method 60.

The base station 30 comprises also a wireless communication unit 32, coupled to the processing circuit 31, allowing said base station 30 to exchange data on wireless links with terminals 20, in the form of radiofrequency signals. The wireless communication unit 32 includes for instance a radiofrequency circuit comprising components considered known to the skilled person.

In other words, the processing circuit 31 and the wireless communication unit 32 of the base station 30 form a set of means configured by software (specific computer program product) and/or by hardware (CPU, DSP, FPGA, ASIC, discrete electronic components, radiofrequency circuit, etc.) to implement all or part of the steps of the wireless communication method P5 or P6 which will be discussed hereinafter. Of course, the base station 30 may also, in some cases, comprise other components which are not represented in the figures and not detailed herein. In particular, the base station 30 may include a communication unit for exchanging data with the CN 12.

The wireless communication units 22, 32 of respectively the terminal 20 and the base station 30 implement one or more wireless communication protocols, for instance Wi-Fi and/or Bluetooth wireless communication protocols, and/or cellular communication protocols such as 3G, 4G, 5G, etc. Depending on the embodiments, the wireless communication system 10 may correspond to a wireless local area network, WLAN, or to a wireless wide area network, WWAN, etc. In some embodiments, the wireless communication system 10 relies at least in part on an orthogonal frequency division multiplexing, OFDM and/or on a discrete Fourier transform-spread OFDM, DFT-s-OFDM.

As discussed above, in a wireless communication between a transmitter and a receiver, phase noise is introduced at both the transmitter side (when e.g. frequency translating, by means of one or more local oscillators, a baseband signal from a baseband frequency to a carrier frequency) and the receiver side (when e.g. frequency translating, by means of one or more local oscillators, a radiofrequency signal from a carrier frequency to a baseband frequency). The characteristics of the phase noise introduced depend on the respective characteristics of each local oscillator involved such that, for a same receiver node, the phase noise characteristics may vary when communicating with different sender node, since each sender node will use its own local oscillators with their own characteristics.

At the receiver node, the baseband signal obtained after frequency translating the received radiofrequency signal may be expressed in time-domain as successive signals / samples :

$$y_n = \psi_n x_n + z_n$$

wherein:

- $y_n$ corresponds to the $n^{th}$ received time-domain signal,
- $x_n$ corresponds to the $n^{th}$ transmitted time-domain signal,
- $z_n$ corresponds to an additive noise, which may be e.g. a zero-mean additive white gaussian noise, AWGN,
- $\psi_n = e^{i\phi_n}$, with $\phi_n \in [-\pi; \pi]$, corresponds to the combined phase noise introduced by both the sender node and the receiver node.

For instance, if we consider a DFT-s OFDM wireless communication system 10, then a time-domain OFDM symbol $\underline{x} = [x_1 \ldots x_N]$ of length $N$ is spread by a discrete Fourier transform, DFT, $F_N$, thereby producing a DFT-spread OFDM symbol $\underline{X} = [X_1 \ldots X_N] = F_N \underline{x}$. The DFT-spread OFDM symbol $\underline{X}$ is then mapped onto different subcarriers and converted to time-domain by e.g. an inverse fast Fourier transform, IFFT, of size $M > N$, and then converted to a radiofrequency signal transmitted to the receiver node.

For instance, the phase noise may be characterized by its 2$^{nd}$ order statistics, e.g. by an autocorrelation function $\underline{\gamma} = [\gamma(0) \ldots \gamma(N - 1)]$ with:

$$\gamma(p) = \mathbb{E}\left[\psi_n \psi_{n-p}{}^*\right]$$

- $\mathbb{E}[\cdot]$ corresponds to the expectation,
- $p$ denotes a delay between phase noise components.

Figure 4 is a schematic representation of a communication between a sender node and one or more receiver node according to an embodiment.

In figure 4, the sender node $U_A$ sends, through a shared channel, a plurality of data packets Pkt41, Pkt42, Pkt43, Pkt44, Pkt45, Pkt46, Pkt47, Pkt48 and Pkt49 to a receiver node $U_B$.

The wireless communication between $U_A$ and $U_B$ may be of different types.

In one example, the waveform for the wireless communication is the OFDM. The reference signals (RS) are then inserted in the frequency-domain within a single OFDM symbol and in the time-domain within a slot according to the specifications. In this example, the reference signal patterns concern the frequency domain insertion. This could be relevant for example to discover frequency-domain characteristics, e.g., the power spectral density of the frequency-domain phase noise or the frequency offset due to a lack of the frequency-domain.

In another example, the waveform for the wireless communication is a transform precoding of OFDM, being the underlying DFT-s-OFDM. The RS can be inserted:

- in the time-domain with the data samples before the transform precoding (i.e the DFT). The RS patterns thus concern the time domain allocation. This could be relevant for example to discover time-domain characteristics, e.g., the autocorrelation of the time-domain phase noise or the output VS input characteristics of the high-power amplifier, or the time offset due to a lack of the time-domain synchronization ;

- in the frequency-domain after the transform precoding by puncturing some transformed data elements on subcarriers. The RS patterns then concern the frequency domain allocation. This could be relevant for example to discover frequency-domain characteristics, e.g., the power spectral density of the frequency-domain phase.

As discussed above, reference signals are inserted in data packets, for example in order to allow the receiver $U_B$ to to discover one or more long-term characteristic of the transmission. According to the disclosure, reference signal can be inserted in the successive sets of data packets according to different reference signal patterns. Each set of data packets comprises one or more data packets.

For example, a first set of data packets comprises the four packets Pkt41, Pkt42, Pkt43 and Pkt44, where reference signals are inserted by the sender $U_A$ according to a first reference signal pattern RS1.

Then the sender $U_A$ performs a switch SW1 from inserting the reference signals according to the first reference signal pattern RS1 to inserting the reference signals according to a second reference signal pattern RS2.

A second set of data packets comprises the three packets Pkt45, Pkt46 and Pkt47, where reference signals are inserted by the sender $U_A$ according to the second reference signal pattern RS2.

Then the sender $U_A$ performs a switch SW2 from inserting the reference signals according to the second reference signal pattern RS2 to inserting the reference signals according to a third reference signal pattern RS3.

A third set of data packets comprises the two packets Pkt48 and Pkt49, where reference signals are inserted by the sender $U_A$ according to the third reference signal pattern RS3.

In a number of embodiments of the invention, said at least one parameter comprises either a spacing between reference signal symbols, or a number of reference signal symbols. Thus, at least two of the reference signal patterns that are used by the sender are characterized by a different spacing between reference signals, or different number of reference signals. Thus, the two RS patterns have different RS symbols densities. This may for example allow the spacing of the reference signals to be adapted to the actual distortion observed in the communication between the sender and receiver node, or to discover at least one long-term characteristic of the transmission in order to determine an optimal future RS insertion pattern.

Thus, the insertion of reference signals and the quality of the transmission is improved.

All the data packets Pkt41, Pkt42, Pkt43, Pkt44, Pkt45, Pkt46, Pkt47, Pkt48 and Pkt49 are sent through the same shared channel. Thus, the reference pattern that is used can be adapted without requiring to reinitialize the whole communication between the sender and the receiver node.

In a number of embodiments of the invention, the switches can be performed upon a signaling received by the sender node from the receiver node.

The figure 4 is provided by means of non-limitative example only of a communication between a sender node and one or more receiver node according to an embodiment. In order to simplify the representation of the figure 4, a single receiver node $U_B$ is represented. Such a communication between a sender node and a single receiver node is qualified as "unicast".

The methods of the disclosure are however also applicable to the transmission of data packets to a plurality of receiver nodes. In such case, there exist a plurality of nodes $U_B$. Such a transmission is qualified as "multicast". In case of a multicast communication, any of the nodes $U_B$ could perform the operations that will be subsequently described for the receiver node.

The methods of the disclosure are also applicable to broadcast communications. In such case the sender node broadcasts the packets without any feedback from the receiver nodes. Thus, embodiments where the operations of the sender node, without any feedback from the receiver nodes, can be implemented.

In order to render the description of the disclosure more intelligible, the disclosure will be exemplified by the transmission of a first set of data packets where reference signals according to a first reference signal pattern, then the transmission of a second set of data packets where reference signals according to a second reference signal pattern. However, the disclosure is of course applicable to the transmission of sets of data packets where reference signals are inserted successively according to a lower or a larger number of different reference signal patterns. The number of data packets where the reference signals have been inserted according to the RS patterns RS1; RS2 and RS3 is also non-limitative and illustrative only, a smaller or larger number of data packets may be used for each reference signal pattern.

In general, we will denote by (RS1) the RS pattern initially used by $U_A$, and in general (RSn) the $n^{th}$ RS pattern used by $U_A$.

Figure 5 is a schematic representation of a method P5 implemented by a sender node according to an embodiment.

The method P5 can be implemented by a sender node such as the sender node $U_A$ represented in figure 4. The sender node may be for example a user terminal, or a base station.

In general, the packets are sent by the sender to the receiver through a shared channel between the sender and the receiver.

The method P5 implements a procedure to insert in a plurality of data packets reference signal patterns according to a plurality of reference signal patterns having different spacings. Such a procedure will be generally referred to as "the procedure". In substance, in the procedure the sender will insert in a plurality of different data packets a plurality of different reference signal patterns that have different spacings, so that it is possible to determine, based upon the reference signals received be the one or more receiver, to determine a long-term characteristic of the transmission. It is however necessary that both the sender and the one or more receiver are aware that the procedure is activated, and that the reference signals are actually aimed to be used in the procedure and not for other purposes, such as for example channel estimation.

To this effect, in a first step S51, the sender node exchanges information in order to initialize the procedure of reference pattern selection.

Thus, the signaling can either be sent from a receiver to the sender to initialize the procedure if the procedure is initialized by the receiver, or sent by the sender to one or more receiver to indicate that the procedure is initialized, for example if the procedure is initialized by the sender, or one among a plurality of receivers, to indicate that the procedure is initialized.

For example, a specific signaling may be performed by the sender or receiver to initialize the flexible selection of reference patterns. When the signaling is performed by the sender, the sender indicates that the procedure is initiated. When the signaling is performed by a receiver, the receiver requests the sender to initiate the procedure.

The signaling can be performed in different ways.

For example, a Boolean value *LongTermRS* may be set to true to activate the flexible selection, and to false to deactivate the flexible selection.

The value of such a Boolean value (or any other signaling to initialize or terminate the process) may be performed through:

- a higher level signaling (RRC). In such case the signaling may be put by the nodes within the shared channel of L1 (PHY) and decoded by L3 (RRC) as a control information of L3 ;

- an existing channel that may be:

    ◦ if the signaling is performed by a Base Station, a PDCCH (control) or PDSCH (shared) channel ;

    ◦ if the signaling is performed by a UE to a BS (base station), a PUCCH (control) or PUSCH (shared) channel ;

    ◦ if the signaling is performed by a UE to another UE, a PSCCH (control), a PSSCH (shared) or a PSFCH (feedback) channel.

Another option may be to use a field dedicated to the procedure (typically a predefined field of one of the channels listed above, that is defined in a communication standard to relate to the procedure), to write descriptors the reference signal patterns that are used in the procedure. For example, the writing of a descriptor of the first reference signal pattern RS1 both indicates that the procedure is initiated when performed by the sender (or request the initialization of the procedure when performed by a receiver), and defines the first reference signal pattern RS1 to use. As the descriptor is written in a field dedicated to the procedure, it is common ground between the sender and the one or more receiver that the first reference signal pattern is used in the procedure, and not for other purposes such as signal estimation.

Thus, the signaling may comprise more or less information: it may only request the initialization of the procedure or indicate the initialization of the procedure, or also describe the first reference signal pattern RS. In other embodiment, the signaling may also more completely describe the procedure, for example by also describing the second reference signal pattern RS2, indicating a time at which a switch will be performed between the two reference signal patterns, etc. Depending upon the amount of information to exchange, the signaling may be performed through a Boolean value, or a more complex field.

A signaling (either from a receiver to the sender, or from the sender to one or more receiver) can be performed in different ways. The following applies both to the signaling to initialize the procedure, and, in a number of embodiments, a further signaling to perform the switch to RS2. It shall be noted that the signaling may belong to the same type or be different.

For example, an explicit signaling can be used, where the sender or a receiver sends an explicit information indicating for example that a switch is to be performed, that a switch has been performed, or describing the pattern that is now used/that is to be used.

For example, the signaling may be performed in a control channel of L1 (for example PUCCH, PDCCH or PSCCH) associated to said shared channel.

Performing signaling in an existing control channel of L1 associated to the shared channel thus eases the control of the switch between reference signals, because specific flags or fields can be defined in a control channel that already exists to control the shared channel. Furthermore, such control channel is, as the shared channel, a channel of L1 (physical layer). Therefore, the decoding of the signaling can be performed directly at the physical layer.

Performing signaling in an existing control channel of L1 associated to the shared channel may either make use of an existing channel, or create a new channel specifically for controlling the switch of RS patterns.

In general, such a control channel may receive during the procedure signaling from the sender to the one or more receiver, and/or from a receiver to the sender. When the signaling is performed in a control channel of L1, the signaling may consist in specific fields could be defined in the control channel, such as for example:

- A field for a flag indicating that a receiver would like to start the procedure
- A field for a flag indicating that a receiver would like to change RS pattern
- A field indicating a preferred RS pattern. Such a field may for example be a field that contains an indicator of a RS pattern, one or more parameters of a RS pattern type. Such a field may for example be used by a receiver to request a switching to a specific RS pattern, or by the sender to indicate the RS pattern that is now used ;
- A field for stopping the RS switching
- A field for starting/stopping the RS allocation
- etc.

The signaling may also be performed in a shared channel (for example PUSCH, PDSCH or PSSCH).

The shared channel may be the shared channel where the communication occurs itself. In such case, the signaling may for example be inserted by the sender in the first set of data packet itself.

The signaling may also be performed in a subsequent shared channel of said radiofrequency wireless communication system, different from said shared channel. For example, the subsequent channel may be another existing channel or a subsequent shared channel created for the control of the shared channel where the data packets are sent.

In cases where a shared channel is used (whether the shared channel where the packets are sent, a new shared channel, or an existing subsequent shared channel), the signaling may be inserted in all or a part of a data packet. In that case, only higher layer can interpret the data as a control signaling therefore, it cannot provide explicit an RS pattern because such information is L1-specific and unreadable at L3 (RRC). However, the signaling could be "start" or "stop" the mechanism, or "switch".

The signaling may comprise one or more descriptor of a reference signal pattern to insert that allows unambiguously identifying the pattern to insert. As discussed above, such a descriptor may be sent by a receiver to the sender to request the use of a specific RS pattern, and/or by the sender to one or more receiver to indicate the pattern that is now used. Such a descriptor can thus be used to identify the first RS pattern RS1 at the initialization of the procedure, then to identify the second RS pattern RS2 during the switch.

The descriptor may for example be a unique descriptor of the pattern RS1 or RS2, that may for example a unique identifier of the pattern RS1 or RS2, or a complete description of the locations of the RS signals in the packets.

The patterns may also belong to a configurable pattern type. In such case, the descriptor may for example comprise:

- An identifier of the pattern type and one or more parameters of the pattern type ;

- one or more parameter of the pattern type, without identifier of the pattern type, if the pattern type is already known, for example if RS1 and RS2 belong to the same pattern type, or if the pattern type is predefined for all the RS pattern that are or will be used.

The figures 6 to 11 will now present some examples of RS pattern types that can be used for inserting reference signals in a number of embodiments of the invention.

For each of the example of the figure 6 to 11, a RS pattern type will be presented, with corresponding parameters. In each case, a signaling can define a specific pattern by either providing an indicator of the RS pattern type used, and the corresponding parameters, or only the parameters if the pattern type is already known.

In general, in the figures 6 to 11, the data symbols will be represented by white squares, while the RS symbols will be represented by gray squares.

Figure 6 is an example of an UDRSP pattern that can be inserted used for inserting reference signals in data packets according to an embodiment.

In the example of figure 6, the reference signal pattern belongs to the Uniformly Distributed RS Pattern (UDRSP) type.

The RS symbols (in this example, RSsymb6.1, RSsymb6.2, RSsymb6.3 and RSsymb6.4) are regularly spaced. The UDRSP pattern type is therefore characterized by a single parameter $\Delta_6$, which represents the spacing between two consecutive reference signal symbols. In the example of figure 6, the value of $\Delta_6$ is equal to 5.

Thus, when a signaling is relative to a RS pattern that belongs to the UDRSP type, the parameter to transmit is the parameter $\Delta_6$.

Figure 7 is an example of a CBRSP pattern that can be inserted used for inserting reference signals in data packets according to an embodiment.

In the example of figure 7, the reference signal pattern belongs to the Chunk-Based RS Pattern (CBRSP) RS pattern type.

In the RS pattern that belong to the CBRSP pattern types, the RS symbols are organized in regularly spaced chunks (Chk7.1, Chk7.2, CHk7.3) in the figure 7.

In each chunk, N regularly spaced RS symbols

are found (RSsymb7.1, RSsymb7.2, RSsymb7.3 and RSsymb7.4 for the chunk Chk7.2 that is zoomed into in the figure 7).

The CBRSP is thus characterized by three parameters:

- $N$ being the number of RS symbols in a chunk ;
- $\Delta_{7.1}$ being the outer spacing (expressed in a number of symbols) between any two consecutive chunks ;
- $\Delta_{7.2}$ being the inner spacing between any two consecutive RS symbols in any chunk.

Thus, when a signaling is relative to a RS pattern that belongs to the UDRSP type, the parameters to transmit may be the parameter $N$, $\Delta_{7.1}$ and $\Delta_{7.2}$.

In other examples of RS pattern that belong to the CBRSP type, the number of RS symbols and/or spacing between RS symbols varies between the chunks. Thus, the values of $N$ and/or $\Delta_{7.2}$ may be transmitted for each chunk.

Figure 8 is a first example of a DDRSP pattern that can be inserted used for inserting reference signals in data packets according to an embodiment.

In the example of figure 8, the reference signal pattern belongs to the Density Decreasing RS Pattern (DDRSP) RS pattern type. The RS symbols are noted RSsymb8.1 , RSsymb8.2, RSsymb8.3, RSsymb8.4, RSsymb8.5 and RSsymb8.6

The DDRSP is characterized by a spacing between any two consecutive RS symbols that is greater than the spacing between any two previous consecutive RS symbols. The spacings follow an evolution law $\mathcal{L}$ .

For example, an evolution law $\mathcal{L}$ ($a$) is described by a single parameter $a$ such that the $n^{th}$ spacing is $\Delta_{8.n} = an + 1$ where $a$ is any scaling integer, e.g., $a = 1$, or $a = 2$, or $a = 3$. In the example of figure 8, the evolution law $\mathcal{L}$ (1) is used

Thus, in the example of figure 8 the spacing is incremented for each subsequent RS symbol :

- $\Delta_{8.1} = 2$ between RSsymb8.1, RSsymb8.2 ;

- $\Delta_{8.2} = 3$ between RSsymb8.2, RSsymb8.3 ;

- $\Delta_{8.3} = 4$ between RSsymb8.3, RSsymb8.4 ;

- $\Delta_{8.4} = 5$ between RSsymb8.4, RSsymb8.5 ;

- $\Delta_{8.5} = 6$ between RSsymb8.5, RSsymb8.6 ;

- *etc.*

Thus, if the RS pattern belongs to the DDRSP with an evolution law $\mathcal{L}$ ($a$), the parameter $a$ needs to be send in the signaling to unambiguously define the RS pattern

Figure 9 is a second example of a DDRSP pattern that can be inserted used for inserting reference signals in data packets according to an embodiment.

In the example of figure 9, the RS symbols are noted RSsymb9.1, RSsymb9.2, RSsymb9.3, RSsymb9.4 and RSsymb9.5.

In this example, the spacings follow a law $\mathcal{L}$ ($a$, $b$) described by two parameters $a$, $b$ such that the $n^{th}$ spacing is $\Delta_{9.n} = ab^n$ where $a$ is any scaling integer, e.g., $a = 1$, or $a = 2$, or $a = 3$, where $b$ is any integer, e.g., $b = 1$, or $b = 2$, or $b = 3$. In the example of figure 9, $a = 1$ and $b = 2$.

Thus, the spacing between is doubled for each subsequent symbol:

- $\Delta_{9.1} = 2$ between RSsymb9.1, RSsymb9.2 ;

- $\Delta_{9.2} = 4$ between RSsymb9.2, RSsymb9.3 ;

- $\Delta_{9.3} = 8$ between RSsymb9.3, RSsymb9.4 ;

- $\Delta_{9.4} = 16$ between RSsymb9.4, RSsymb9.5 ;

- *etc.*

Thus, if the RS pattern belongs to the DDRSP with an evolution law $\mathcal{L}$ ($a$, $b$), the parameters $a$ and $b$ need to be send in the signaling to unambiguously define the RS pattern

Figure 10 is an example of a CBDDRSP pattern that can be inserted used for inserting reference signals in data packets according to an embodiment.

In the example of figure 10, the reference signal pattern belongs to the Density Decreasing RS Pattern (DDRSP) type. CBDDRSP is a repetition of DDRSP every $\Delta$ symbols. The CBDDRSP is thus characterized by two parameters, an outer spacing $\Delta$, and an evolution law $\mathcal{L}$ of the spacing within a single chunk.

In the example of figure 10, the outer spacing is noted $\Delta_{10}$, and the evolution law is the law L(1) discussed with reference to figure 8.

Three Chunks Chk10.1, Chk10.2 and CHk10.3 are represented, and a zoom is performed on chunk Chk10.2, where the spacings between the RS symbols follow the law L(1):

- $\Delta_{10.1} = 2$ between the RS symbols RSsymb10.1, RSsymb10.2 ;

- $\Delta_{10.2} = 3$ between the RS symbols RSsymb10.2, RSsymb10.3 ;

- $\Delta_{10.3} = 4$ between the RS symbols RSsymb10.3, RSsymb10.4 ;

- $\Delta_{10.4} = 5$ between the RS symbols RSsymb10.4, RSsymb10.5 ;

- $\Delta_{10.5}$ = 6 between the RS symbols RSsymb10.5, RSsymb10.6 ;

- *etc.*

Figure 11 is an example of a CBRRSP pattern that can be inserted used for inserting reference signals in data packets according to an embodiment..

In the example of figure 11, the RS pattern belongs to a Chunk-based random RS pattern (CBRRSP) type.

The CBRRSP is similar to the CBRSP except that the RS pattern within a single chunk is random. The CBRP is characterized by two parameters:

- *N* being the number of RS symbols in a chunk
- $\Delta_{11}$ being the spacing (expressed in a number of symbols) between any two consecutive chunks
- $\Delta_{11.1}$ being the spacing between the RS symbols RSsymb11.1, RSsymb11.2
- $\Delta_{11.2}$ being the spacing between the RS symbols RSsymb11.2, RSsymb11.3
- Etc.

In the example of figure 11, three chunks Chk11.1, Chk11.2 and Chk11.3 are represented. Chk11.2 is zoomed in: *N* = 7 RS symbols RSsymb11.1, RSsymb11.1, RSsymb11.2, RSsymb11.3, RSsymb11.4, RSsymb11.5 and RSsymb11.6, are randomly placed within he chunk Chk11.7.

The examples of figures 6 to 11 are provided by means of non limitative examples only of RS patterns and corresponding parameters that may be used in the invention. However, the invention is not restricted to these examples, and different patterns may be used, provided that the sender and receiver are able to exchange information indicating which pattern is used.

The method P5 comprises a second step S52 of inserting reference signals according to a first reference signal pattern in a first set of data packets. The first reference signal pattern can for example be the pattern RS1.

The pattern RS1 can be selected by the sender node $U_A$ according to different logics.

For example, while no information is available regarding the node $U_B$, the node $U_A$ can only rely, at least, on the state of the communication (the carrier frequency, the subcarrier spacing, the bandwidth, etc). In this perspective, (RS1) could be selected according to the usual way described in the state-of-the-art. Or, $U_A$ can randomly select one RS pattern, or $U_A$ can select the densest RS pattern, or $U_A$ can select the least dense RS pattern, etc.

In an alternative, $U_A$ can use some assumptions on the other node $U_B$, e.g., the category (or the capabilities) of the node if it is a UE. The capabilities may concern the kind of receiver processing, or the kind and/or quality of the RF materials.

In another alternative, $U_A$ can select an RS pattern according to its own specificities to already orient the discovery for the other node $U_B$.

In yet another alternative, $U_A$ can use some old, stored information if $U_B$ have already communicated with it, or if receives some information from any other node or source regarding the capability of $U_B$.

The pattern RS1 can also be requested by a receiver node. For example, in embodiment where the receiver node performs the signaling at step S51 by filling a field specific to the procedure with a descriptor of the pattern RS1, the pattern RS1 is requested as the first pattern to use by the receiver node.

The method P5 then comprises a third step S53 of sending, through a shared channel of said radiofrequency wireless communication system, said first set of data packets to one or more receiver node of said radiofrequency wireless communication system. The one or more receiver node may for example be the receiver node $U_B$ represented in figure 4. According to various embodiments of the invention, the one or more receiver node may comprise one or more user equipment and one or more base station.

As described above, the sender node switches from inserting reference signals according to the first reference signal pattern RS1 to inserting reference signals according to a second reference signal pattern RS2, where values of at least one paremeter are different between the first reference signal pattern RS1 and the second reference signal pattern RS2.

Thus, the method P5 comprises a fourth step S54 of inserting reference signals according to the second reference signal pattern RS2 in a second set of data packets, and a fourth step S55 of sending, though said shared channel, said second set of data packets to said one or more receiver node Us.

The selection of the pattern RS2 could be performed in different ways. For example, the selection of RS2 could be performed according to:

- A mathematical rule.

  ○ For example, RS2 may belong to the same type than the first pattern RS1, RS2 can be selected by performing a regular variation of one or more parameter of RS1. For example:

    - For patterns belonging to the UDRSP type as represented in figure 6, $\Delta_6$ can be reduced by 2 at each switch ;
    - For patterns belonging to the CBRSP type as represented in figure 7, $\Delta_{7.1}$ and/or $\Delta_{7.2}$ can be reduced by 2 at each switch ;
    - Etc.

  ○ Use for RS2 another type of RS insertion pattern than RS1, wherein the goal is to go for a pattern with a smaller density.

- An indication of a preferred RS insertion pattern receiver from receiver node $U_B$. The sender node may not exactly select the said preferred RS insertion pattern but it could select an RS pattern as close as possible to this one ; For example, the indication of a preferred RS pattern received from a receiver node can be the trigger for switching from (RS1) to another RS ;
  - A random selection.

In general, the use of a mathematical rule, for example a mathematical rule where the spacing are divided at each switch, allows discovering different parts of a long term characteristic, for example different portions of an autocorrelation function of phase noise.

In case of a multicast or groupcast transmission, where there is a plurality of receivers, that each indicate to the sender their preferred RS pattern, the sender can select the second RS insertion pattern RS2 according to different rules. For example, the sender node $U_A$ may select RS2 according to:

- an indication on a preferred RS insertion pattern from each receiver node $U_B$. In this case, the sender node $U_A$ could for example use:

  ○ an average RS pattern among the preferred RS insertion patterns of the receiver nodes (for example if all the preferred RS insertion patterns belong to the same type with different values of a spacing parameter, the RS pattern selected by $U_A$ can have an average value of the parameter), or

  ○ the densest pattern among the preferred patterns of the receiver nodes. For example, if all the preferred RS insertion patterns belong to the same type with different values of a spacing parameter, the RS pattern selected by $U_A$ can have the lowest value of the spacing parameter. This everyone successful discovery of a long-term characteristic at the expense of the overhead, or

  ○ the least dense pattern to ensure successful discovery a long-term characteristic for some users with a least cost on the overhead. The said indications coming from multiple nodes, either they are naturally multiplexed by being in dedicated data packets, or they are multiplexed by code, or by phase shift if the inner RS sequences allow it like Zadoff-Chu sequences. In this case, they are transmitted to the sender node $U_A$ through dedicated feedback channels.

A groupcast/multicast transmission may also have an impact on the time where the switch from inserting RS1 to inserting RS2 is performed.

For example, each of the receiver node may require a different time to perform the switch. Therefore, assuming that the sender is aware of the duration required by each receiver node to perform an accurate discovery, the sender may switch from inserting RS1 to inserting RS2 for example when:

- everyone has reached a sufficiently accurate discovery (e.g at the highest time among all the time respectively required by each receiver node to perform the discovery); or

- when an average duration has elapsed, or

- when the he smallest duration among the durations required by each of the receiver nodes has elapsed..

A groupcast/multicast transmission may also have an impact on stop of the RS allocation.

For example, in an embodiment wherein each receiver node sends a signaling to the sender node to stop the allocation, the sender node may for example stop inserting RS signals when all, or a defined number of the receivers have requested to stop the allocation.

All the principles described above can be extended to any number of subsequent reference signal pattern RSn. Thus, the sender can switch between successive reference signal pattern having different spacings between reference signals, for example to adapt to the distortion of the transmission, or to discover different parts of a long-term characteristic of the transmission such as an autocorrelation function.

A switch between the insertion of two different reference signal patterns can be performed either at the initiative of the sender node, or a receiver node.

In general, the switch can be accompanied by a further signaling that indicates or triggers the switch.

For example, when a switch is performed, the sender node $U_A$ can send the further signaling to the one or more receiver node $U_B$, so that the one or more receiver node $U_B$ is aware of the switch, and the reference signal pattern that is used. This ay in particular be the case if the switch is initiated by the sender node $U_A$, but also if there are a plurality of receiver nodes, and the switch is initiated by one among the receiver nodes.

If the switch is initiated by a receiver node, the receiver node can send a further signaling to the sender node in order to trigger the switch, and optionally indicate the reference insertion pattern to use. In such a case, the switching of reference signal pattern to insert is performed upon the reception of the signaling by the sender node.

All the elements indicated above regarding the signaling indicating the initialization of the procedure are also applicable to the further signaling.

In addition, when the signaling consist in an insertion of a descriptor of the reference patterns to insert in a field dedicated to the description of reference signal patterns in the procedure, the further signaling that indicates the switch may be a replacement of the descriptor of said first reference signal pattern by a descriptor of said first reference signal pattern in the field.

Thus, this both indicates that a switch is to be performed, and describes the second reference signal pattern RS2 to insert.

The switch from the insertion of the pattern RS1 to the insertion of the pattern RS2 can be performed according to different means, either at the initiative of the sender node $U_A$ or a receiver node Us.

For example, a time-based switch can be performed, a switch from inserting RS1 to inserting RS2 being performed when RS1 has been inserted during a predefined duration.

For example, as soon as a first RS pattern (RS1) is in use for sending data packets to $U_B$, the node $U_A$ can start a time-related counter. This counter can increase at the same rhythm as the one of the data packets transmissions, or as the one of the slots, or as one of the OFDM/DFT-s-OFDM symbols, etc. When this counter reaches some value, then $U_A$ switches to a second RS pattern (RS2). On possible rationale behind the counter is that discovering a long-term characteristic requires a minimum amount of RS observations to be well discovered. As an illustration, estimating an average of a random process whose standard deviation is large requires a larger amount of RS observations - and to some extent a larger target value of the counter - than estimating an average of a random process whose standard deviation is small.

The value defining the counter could be pre-configured in the hardware of $U_A$ as a function of the RS pattern itself. In this example, the node $U_A$ assumes some relevant amount of time for which the RS pattern is in use to efficiently discover some part of the long-term characteristic. For example, the value corresponds to a number of observations on RS symbols that allows for an arbitrary good reliability of the characteristic discovery represented by the standard deviation of the associated estimate process.

The value defining the counter could be pre-configured in the hardware of $U_B$, and not $U_A$, as a function of the RS pattern itself. In this example, the node $U_B$ assumes some relevant amount of time for which the RS pattern is in use to efficiently discover some part of the long-term characteristic. Therefore, when $U_B$ observes that $U_A$ allocates a new RS pattern, $U_B$ indicates to $U_A$ when to change. This indication could be carried within the data packets (shared channel), or within a new feedback channel dedicated to this usage.

Another alternative for deciding of the time stamps for switching is to consider a random law. The advantage is that no counter is to be created and maintained. By randomization of the said time stamps, the nodes expect some good discovery of a long-term characteristic, but the number of switches is not predictable.

As discussed with reference to figure 4, the RS can be inserted in different domains. The steps of inserting the RS signal in data packets, and sending data packets, thus depend upon the type if insertion. For example:

- If the waveform for the wireless communication is a transform precoding of OFDM, and the RS patterns are inserted in the time domain in data packets before the transform precoding, in practice:

  ○ at steps S52 and S54, the reference signal symbols are inserted within data symbols to obtain data packets containing the RS symbols in the time domain ;

  ○ at steps S53 and S55, the DFT is applied to the resulting data packets in the time domain to obtain transformed data packets in the frequency domain, that are sent to the receiver;

- If the waveform for the wireless communication is a transform precoding of OFDM, and the RS patterns are inserted in the frequency-domain after the transform precoding, in practice:

  ○ at steps S52 and S54, the reference signal symbols are inserted directly in transformed data packets in the frequency domain ;

  ○ at steps S53 and S55, the transformed data packets wherein the reference signal symbols have been inserted in the frequency domain are sent to the receiver;

- etc.

Figure 12 is first example of an autocorrelation function of phase noise of a wireless communication that can be determined according to an embodiment.

In a number of embodiments of the invention, the analysis of the received data packets where the reference signals have been inserted according to a plurality of different reference signal pattern having different spacings allow discovering one or more long term characteristic of a transmission between the sender and the one or more receiver.

Such long-term characteristics can be, in one example, the statistical properties of the phase noise, or the statistical properties of the nonlinearities stemming from the high-power amplifier, or the statistical properties of the carrier frequency offset.

Such statistical properties can be:

- In one example the autocorrelation of a variable measured in the time domain, or the autocorrelation of a variable measured in the frequency domain, or the power spectral density of a variable, or the mean value of a variable, or the standard deviation of a variable, or the $n^{th}$ moment of a variable.

- In one another example, the coherence bandwidth or a frequency spacing for which the autocorrelation in the frequency domain goes below a predefined value, or the coherence time or a time delay for which the autocorrelation in the time domain goes below a predefined value, or a Boolean value if the mean value goes below a predefined value, or a Boolean value if the standard deviation goes below a predefined value, or a Boolean value if the $n^{th}$ moment goes below a predefined value.

A non limitative list of the possible long term characteristics are provided below:

- phase noise ;

- non-linearities stemming from a high-power amplifier of the sender node ;

- a carrier frequency offset of the radiofrequency wireless communication system ;

- an autocorrelation of a variable measured in the time domain or in the frequency domain;

- an power spectral density of a variable measured in the time domain or in the frequency domain;

- a mean value of a variable measured in the time domain or in the frequency domain;

- a standard deviation of a variable measured in the time domain or in the frequency domain ;

- a $n^{th}$ moment of a variable measured in the time domain or in the frequency domain

The long-term characteristic may more generally be a phase noise temporal coherence indicator representative of a temporal coherence of a phase noise affecting baseband signals obtained from radiofrequency signals received by the receiver. Such phase noise temporal coherence indicator represents the temporal coherence of the phase noise affecting the received baseband signals which, in most cases is introduced mainly by the local oscillators of the receiver. The temporal coherence of the phase noise is typically the measure of the mean correlation between the phase noises introduced at times separated by a given delay, evaluated for different delays (a.k.a. phase noise autocorrelation function). The temporal coherence therefore measures, on the average, how fast the phase noise introduced is expected to vary over time. Depending on the embodiments, a phase noise temporal coherence indicator may correspond to e.g. an estimated phase noise autocorrelation function (or an information derived therefrom such as its initial slope, its floor limit, its average value, etc.), a binary value indicating if the variation of the phase noise is fast or slow, etc. The phase noise temporal coherence indicator may notably be estimated based on a phase noise autocorrelation function of the phase noise of the received signals

The discovery of such a characteristic of the transmission, and notably an autocorrelation function of the Rs symbols depending upon their distance, allow selecting the best suited reference signal pattern to insert in the data packets to transmit.

The example of figure 12 provides a first example of an autocorrelation $\gamma(p)$ between two phase noise samples, as a function of a distance $p$ between the two samples. The autocorrelation $\gamma(p)$ is represented on the vertical axis, and the distance $p$, in number of samples, in the horizontal axis.

Figure 13 is second example of an autocorrelation function of the phase noise of a wireless communication that can be determined according to an embodiment.

The representation of the axis on figure 13 is the same as the representation of the axis in figure 12.

In both figures 12 and 13, the autocorrelation follows an exponential law $\gamma(p) = e^{-ap}$, with $a = 0.01$ in the example of figure 12, with $a = 0.002$ in the example figure 13.

The figures 12 and 13 show that depending upon the characteristics of the sender device, receiver device or the channel, long term characteristics of the transmission, such as for example the law defining the autocorrelation function between two symbols at a given distance, can be different.

Such long-term characteristics have an impact on most relevant RS symbols patterns to use for a given transmission. In the example of figures 12 and 13, it is for example possible to use more sparse pattern in the example of figure 13 than in the example of figure 12, because more distant symbols can be correlated.

Meanwhile, using transmissions with the two RS patterns RS1 and RS2 having different spacings allows determining the long-term characteristics of the transmission, for example the law defining the autocorrelation between symbols. Thus, the two RS insertion patterns RS1 and RS2 may be defined to discover different parts of the autocorrelation. For example, the RS insertion patterns RS1 and RS2 allow determining the autocorrelation function at the points defined by the reference signal pattern (i.e the autocorrelation at the distances that can be measured using the reference signals of the signal pattern) , which ultimately allows determining the parameter and defining the autocorrelation function.

For example, in the figure 12, where $\gamma(p) = e^{-ap}$, with $a = 0.01$:

  ▪ a small distance between the RS symbols is relevant to discover $\gamma(p)$ for small values of $p$, e.g., for $p \leq 500$. For greater values of $p$, e.g., $p > 500$, though, the discovery could be done with greater distances between RS symbols with the same accuracy. Using grater distances between RS symbols where they allow a reliable estimation (e.g for high values of $p$) dramatically reduce the RS overhead.

- A great distance between the RS symbols is relevant to discover $\gamma(p)$ for great values of $p$, e.g., $p > 500$. For smaller values of $p$, e.g., $p \leq 500$, though, the discovery is not well performed with this same distance because the autocorrelation changes faster.

Thus, in the example of the figure 12, a threshold $Ts_{12}$ corresponding to $p = 500$ can be defined, where RS1 is aimed to discover $\gamma(p)$ above the threshold $Ts_{12}$, and RS2 is aimed to discover $\gamma(p)$ below the threshold $Ts_{12}$ The threshold can for example be selected to separate the parts of the autocorrelation function where RS1 and RS2 are respectively expected to provide more accurate results. Thus, an accurate estimation of the autocorrelation function can be obtained with a drastically reduced overhead, due to the use of a RS pattern with smaller RS density where is it sufficient to obtain an accurate estimation Alternatively, the whole autocorrelation function can be estimated using RS1 and RS2, and the two complete estimates can be averaged, each of the RS patterns providing accuracy in a different part of the autocorrelation function.

In the example of figure 12, the sender node $U_A$ can for example select the first pattern RS1 to be the CBRSP pattern represented on figure 7 with $N = 500$, $\Delta_{7.2} = 10$, $\Delta_{7.1} = 500$.

In the figure 13, where a = 0,002, a threshold $Ts_{13}$ can also be defined to separate small and great distances for the discovery of the autocorrelation function and switch RS insertion pattern. However, the threshold $Ts_{13}$ can be set to $p = 2500$ instead of $p = 500$.

In the example of figure 13, RS1 could be an UDRSP such as exemplified in figure 6 with $\Delta_6 = 500$. Thus, $U_B$ can obtain a sampled version of, at least, the autocorrelation of $U_A$, where the exponential curvature of the said autocorrelation is well reflected for $p = 500$, $p = 1000$, $p = 1500$, $p = 2000$.

In order to determine the autocorrelation between $p = 2000$ and $p = 4000$, it is then possible to use as RS2 an UDSRP pattern with $\Delta_6 = 2000$. The larger spacing in RS2 ($\Delta_6 = 2000$ in $RS2$) compared to RS1 ($\Delta_6 = 500$ in $RS1$) drastically reduces the RS overhead in RS2 compared to RS1. Thus, the autocorrelation of the phase noise can be accurately determined up to $p = 4000$ with a reduced RS overhead. This example provides an example of selection of patterns to accurately determine the autocorrelation function of the phase noise based on two different patterns. This example demonstrates that switching between to RS patterns with two different spacing parameter values allows accurately determining the autocorrelation of the phase noise for a large number of distinct values, while reducing the overhead of the pilot sequence, since the pattern RS2 has a much smaller RS symbols density than RS1. This example is however provided by means of non-limitative example only of an embodiment of the invention. Many different RS patterns, parameters and switches may be used in different embodiments of the inventions. According to various embodiments of the invention, the successive RS patterns that are used may belong to the same or different RS pattern types.

As already explained above, the switching between different reference signal patterns could be performed at the initiative of the sender, or of one or more receiver.

For example, the switch may be performed at the initiative of the sender on a time basis. For example, it can be estimated that inserting RS1 during a predefined duration is sufficient to obtain an accurate estimate of the autocorrelation in a range of values of $p$.

The switch may also be performed at the initiative of one or more receiver, for example once an estimate of a long-term characteristics is considered as sufficiently accurate.

Such a criterion could relate for example to a percentage of discovery of the characteristics, the variance of the estimator of the characteristic, etc. Once the said criterion is above or below (depending on the criterion) a given threshold (potentially pre-configured), a receiver node $U_B$ indicates to the sender node $U_A$ to switch to inserting RS2. For example, in figures 12 and 13, when $U_B$ observes that the estimate of the autocorrelation between $p = 2500$ and $p = 4000$ has reached a sufficiently low variance or has not changed between two successive transmissions of data packets where the RS insertion pattern RS1 has been inserted, a receiver node $U_B$ can indicate to the sender node $U_A$ to switch from inserting RS1 to inserting RS2..

Figure 14 is a schematic representation of a method implemented by a receiver node according to an embodiment.

The method P14 is a method that can be implemented by a receiver node of a radiofrequency wireless communication system such as the node $U_B$.

The method P14 comprises a first step S141 of sending to a sender node, or receiving from said sender node, a signaling indicating an initialization of a procedure to insert in a plurality of data packets reference signal patterns according to a plurality of reference signal patterns having respectively a plurality of distinct values of at least one parameter. The step S141 corresponds to the step S51 on the sender side.

The method P14 comprises a second step S142 of receiving from a sender node $U_A$ of said radiofrequency wireless communication system and through a shared channel of said radiofrequency wireless communication system, a first set of received data packets, said first received set of data packets corresponding to a first set of data packets sent by the sender node $U_A$, where said sender node $U_A$ has inserted reference signals according to a first reference signal pattern RS1.

The method P14 further comprises a step S143 of receiving from said sender node $U_A$) and through said shared channel, a second set of received data packets, said second received set of data packets corresponding to a second set of data packets sent by the sender node $U_A$, where said sender node $U_A$ has inserted reference signals according to a second reference signal pattern RS2, values of said at least one parameter being different between the first reference signal pattern RS1 and the second reference signal pattern.

The steps S142 and S143 thus correspond respectively to receiving a first and a second sets of received data packets corresponding to the first and second sets of data packets sent by the sender at steps S53 and S55.

The reception of the received of data packets allows retrieving received reference signals corresponding respectively to the reference signals inserted by the sender according to the first and second insertion patterns RS1 and RS2.

As discussed above, the switch from inserting RS1 to inserting RS2 may be initiated by the sender or the receiver.

One example of switch initiated by the receiver relates to the discovery of a long-term characteristic of the transmission, for example an autocorrelation between the reference signals depending upon their distance, as exemplified for example in figures 12 and 13. In such case, the receiver may initiate a switch for example when it is able based upon the received reference signals corresponding to RS1 to discover a part of the characteristic with a sufficient accuracy.

The analysis by the receiver of the received reference signals may be used in different ways.

For example, in a number of embodiments, the received reference signals, in particular inserted according to RS2, may allow accurately correcting the received signals, because the pattern RS2 has been selected to be adapted to the characteristics of the transmission from the sender to the receiver.

In a number of embodiments, the analysis of the received reference signals allow determining one or more long-term characteristic of a transmission between the sender and the one or more receiver, such as for example a law of autocorrelation between the reference signals depending upon their distance, as exemplified for example in figures 12 and 13. Such a determination may for example comprise determining a value of a parameter of the characteristic, for example determining the value of the parameter a of the laws of autocorrelation represented in the figures 12 and 13. Given the definitions provided in the description of figure 3, the autocorrelation $\gamma(p)$ is estimated from the received reference signals spaced by a distance of $p$ symbols. In one example, we use a least-square estimator at the receiver side to compute the estimate of $\gamma(p)$ as $\mathbb{E}\left[\left(y_n x_n^*\right)\left(y_{n-p} x_{n-p}^*\right)^*\right]$ where the values of the indexes $n$ and $n - p$ refer to positions of the reference signals. In one another example, we use a minimum mean-square error estimator at the receiver side to compute the estimate of $\gamma(p)$ as $\mathbb{E}\left[\left(\frac{y_n x_n^*}{|x_n|^2 + \sigma^2}\right)\left(\frac{y_{n-p} x_{n-p}^*}{|x_{n-n}|^2 + \sigma^2}\right)^*\right]$ where $\sigma^2$ is the AWGN variance.

Once the long-term characteristic has been determined, the characteristic can be used to perform a subsequent allocation of reference signals that is adapted to the transmission, so as to optimize the transmission from the sender to the receiver to the actual characteristics of the transmission.

For example, the least dense pattern that allows accurately correcting for phase noise (e.g the pattern where the temporal spacing of the reference signals corresponding to the greatest temporal spacing for which the phase noise mitigation performance satisfies a minimum phase noise performance requirement) can be used for subsequent transmissions. For example, the European patent application filed under the number EP 23305597.9 discloses ways of determining reference signals according patterns to use according to a determined autocorrelation function so that a phase noise mitigation performance can be achieved with the least dense RS insertion pattern, and thus the smallest overhead.

To this effect, the method P14 may comprise for example:

- sending to the sender a descriptor of the long-term characteristic, such as for example a descriptor of an auto-correlation comprising for example the parameter a of the auto-correlation functions represented in the figures 12 and 13 ; or
- determine a third reference signal pattern to insert (for example a third reference signal pattern that optimizes the transmission as discussed above), and send to the sender in order to insert the third reference signal pattern in subsequent transmissions and optimize the communication.

This disclosure is not limited to the method, device and computer program described here, which are only examples. The invention encompasses every alternative that a person skilled in the art would envisage when reading this text.

**Claims**

1. A method, implemented by a sender node ($U_A$ of a wireless communication system (10), said method comprising:

   - sending to one or more receiver node, or receiving from said one or more receiver node (S51), a signaling indicating an initialization of a procedure to insert in a plurality of data packets reference signals according to a plurality of reference signal patterns having respectively a plurality of distinct values of at least one parameter;
- inserting (S52) reference signals according to a first reference signal pattern (RS1) in a first set of data packets ;
- sending (S53), through a shared channel of said radiofrequency wireless communication system, said first set of data packets to said one or more receiver node ($U_B$) of said radiofrequency wireless communication system ;
- inserting (S54) reference signals according to a second reference signal pattern (RS2) in a second set of data packets, values of said at least one parameter being different between the first reference signal pattern (RS1) and the second reference signal pattern (RS2) ;
- sending (S55), through said shared channel, said second set of data packets to said one or more receiver node ($U_B$).

2. The method of claim 1, wherein said at least one parameter comprise either a spacing between reference signal symbols, or a number of reference signal symbols.

3. The method of one of claims 1 or 2, wherein said signaling is sent or received in an existing control channel associated to said shared channel.

4. The method of one of claims 1 or 2, wherein said signaling is sent or received in a feedback channel.

5. The method of one of claims 1 or 2, wherein said signaling is sent or received as an RRC signaling.

6. The method of any one of the preceding claims, further comprising sending to said one or more receiver node ($U_B$) a further signaling indicating a switch from the first reference signal pattern (RS1) to the second reference signal pattern (RS2).

7. The method of any one of claims 1 to 5, wherein switching from inserting reference signals according to a first reference signal pattern (RS1) to inserting reference signals according to a second reference signal pattern (RS2) is performed upon the reception by the sender node ($U_A$) of said further signaling from said one

8. The method of any one of claims 6 or 7, wherein:

- said signaling indicating the initialization of the procedure is an integration of a descriptor of said first reference signal pattern in a field dedicated to the description of reference signal patterns in said procedure ;

- said further signaling indicating the switch is a replacement of the descriptor of said first reference signal pattern by a descriptor of said first reference signal pattern in said field dedicated to the description of reference signal patterns in said procedure.

9. The method of any one of claims 1 to 5, wherein switching from inserting reference signals according to a first reference signal pattern to inserting reference signals according to a second reference signal pattern is performed upon the elapsing of a duration since the start of inserting said reference signals according to a first reference signal pattern.

10. A method (P14), implemented by one or more receiver nodes ($U_B$ of a radiofrequency wireless communication system, said method comprising:

- sending to a sender node, or receiving from said sender node (S141), a signaling indicating an initialization of a procedure to insert in a plurality of data packets reference signals according to a plurality of reference signal patterns having respectively a plurality of distinct values of at least one parameter;
- receiving (S142) from said sender node ($U_A$) of said radiofrequency wireless communication system and through a shared channel of said radiofrequency wireless communication system, a first set of received data packets, said first received set of data packets corresponding to a first set of data packets sent by the sender node ($U_A$), where said sender node ($U_A$) has inserted reference signals according to a first reference signal pattern (RS1) ;
- receiving (S143) from said sender node ($U_A$) and through said shared channel, a second set of received data packets, said second received set of data packets corresponding to a second set of data packets sent by the sender node ($U_A$), where said sender node ($U_A$) has inserted reference signals according to a second reference signal pattern (RS2) , values of said at least one parameter being different between the first reference signal pattern (RS1) and the second reference signal pattern (RS2).

11. The method of the preceding claim, further comprising determining, based upon a first received reference signal pattern in said first set of received data packets, and a second received reference signal pattern in said second set of received data packets, one or more long-term characteristic of a transmission between the sender and the one or more receiver.

12. The method of the preceding claim, wherein said one or more long-term characteristic of the transmission relate to one or more of :

- phase noise ;
- non-linearities stemming from a high-power amplifier of the sender node ;
- a carrier frequency offset of the radiofrequency wireless communication system ;
- an autocorrelation of a variable measured in the time domain or in the frequency domain;
- a power spectral density of a variable measured in the time domain or in the frequency domain;
- a mean value of a variable measured in the time domain or in the frequency domain;
- a standard deviation of a variable measured in the time domain or in the frequency domain ;
- a $n^{th}$ moment of a variable measured in the time domain or in the frequency domain.

13. The method of one or claims 11 or 12, further comprising :

- sending to said sender a signaling said one or more long-term characteristic of the transmission ; or

  ∘ determining, from said one or more long-term characteristic of the transmission, a third reference signal pattern ; and
  ∘ sending to said sender a signaling to switch to inserting reference signals according to said third reference signal pattern.

14. A telecommunication device adapted to implement a method according to one of claims 1 to 13.

15. Computer software comprising instructions to implement a method according to one of claims 1 to 13 when the software is executed by a processor.

Fig. 1

Fig. 2

Fig. 3

Fig. 4

S51 — Signal

S52 — Ins RS1

S53 — Send Pkt set #1

S54 — Ins RS2

S55 — Send Pkt set #2

P5

# FIG. 5

**FIG. 6**

**FIG. 7**

**FIG. 8**

**FIG. 9**

**FIG. 10**

**FIG. 11**

**FIG. 12**

**FIG. 13**

| S141 | Signal |
| S142 | Rec RS1 |
| S143 | Rec RS2 |

P14

# FIG. 14

Europäisches
Patentamt

European
Patent Office

Office européen
des brevets

## EUROPEAN SEARCH REPORT

Application Number

EP 24 30 6494

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEC: "Remaining issues on DMRS configurations", 3GPP DRAFT; R1-1720575, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 17 November 2017 (2017-11-17), XP051369046, Retrieved from the Internet: URL:http://www.3gpp.org/ftp/tsg%5Fran/WG1%5FRL1/TSGR1%5F91/Docs/ [retrieved on 2017-11-17] * figure 1 * * sections 1, 2 * ----- | 1,10,14, 15 | INV. H04L5/00 H04L25/02 H04L27/26 |
| X | US 2021/306122 A1 (MANOLAKOS ALEXANDROS [US] ET AL) 30 September 2021 (2021-09-30) * figures 4-6 * * paragraph [0007] * * paragraph [0017] * * paragraph [0034] - paragraph [0035] * * paragraph [0080] * * paragraph [0085] - paragraph [0088] * * paragraph [0094] - paragraph [0096] * * paragraph [0113] - paragraph [0115] * ----- | 1,10,14, 15 | TECHNICAL FIELDS SEARCHED (IPC) H04L |

-/--

The present search report has been drawn up for all claims

| Place of search | Date of completion of the search | Examiner |
|---|---|---|
| The Hague | 26 May 2025 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 6494

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "Evaluation results of DMRS design for DL data channel", 3GPP DRAFT; R1-1709942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 17 June 2017 (2017-06-17), XP051304682, Retrieved from the Internet: URL:http://www.3gpp.org/ftp/tsg_ran/WG1_RL 1/TSGR1_AH/NR_AH_1706/Docs/ [retrieved on 2017-06-17] * figures 1, 5, 7, 10 * * sections 1, 2, 2.1, 2.2 * ----- | 1,2,10, 14,15 | |
| X | MITSUBISHI ELECTRIC: "Views on DL reference signal designs for NR positioning", 3GPP DRAFT; R1-1912836, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20191118 - 20191122 8 November 2019 (2019-11-08), XP051820208, Retrieved from the Internet: URL:https://ftp.3gpp.org/tsg_ran/WG1_RL1/T SGR1_99/Docs/R1-1912836.zip R1-1912836-positioning_DL_A.docx [retrieved on 2019-11-08] * figure 1 * * sections 2.2, 2.4 * * Appendix * ----- -/-- | 1,2,10, 14,15 | TECHNICAL FIELDS SEARCHED (IPC) |

The present search report has been drawn up for all claims

| Place of search | Date of completion of the search | Examiner |
|---|---|---|
| The Hague | 26 May 2025 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 30 6494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/112535 A1 (WANG LILEI [CN] ET AL) 15 April 2021 (2021-04-15)<br>* figures 11-13 *<br>* paragraph [0015] - paragraph [0017] *<br>* paragraph [0022] *<br>* paragraph [0063] - paragraph [0064] *<br>* paragraph [0093] - paragraph [0095] *<br>* paragraph [0126] - paragraph [0130] *<br>* paragraph [0154] - paragraph [0162] *<br>* paragraph [0170] - paragraph [0171] *<br>* paragraph [0231] - paragraph [0242] *<br>* paragraph [0248] - paragraph [0249] *<br>----- | 1,3-10,14,15 | |
| X | US 2019/149300 A1 (YOON SUNGJUN [KR]) 16 May 2019 (2019-05-16)<br>* paragraph [0057] - paragraph [0059] *<br>* paragraph [0092] - paragraph [0096] *<br>* paragraph [0101] *<br>* paragraph [0113] - paragraph [0118] *<br>* paragraph [0125] - paragraph [0129] *<br>* paragraph [0140] - paragraph [0141] *<br>* paragraph [0146] - paragraph [0147] *<br>* paragraph [0170] *<br>* paragraph [0191] - paragraph [0197] *<br>----- | 1,3-10,14,15 | |
| X | US 2015/282123 A1 (MIAO HONGLEI [DE] ET AL) 1 October 2015 (2015-10-01)<br>* figures 2-4 *<br>* paragraph [0013] - paragraph [0014] *<br>* paragraph [0020] - paragraph [0026] *<br>* paragraph [0030] - paragraph [0033] *<br>* paragraph [0037] - paragraph [0045] *<br>----- | 1,10-15 | **TECHNICAL FIELDS SEARCHED (IPC)** |

-/--

The present search report has been drawn up for all claims

| Place of search | Date of completion of the search | Examiner |
|---|---|---|
| The Hague | 26 May 2025 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EUROPEAN SEARCH REPORT**

Application Number

EP 24 30 6494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/327762 A1 (TAKEDA KAZUAKI [JP] ET AL) 24 October 2019 (2019-10-24)<br>* figures 2, 4 *<br>* paragraph [0037] - paragraph [0042] *<br>* paragraph [0054] - paragraph [0061] *<br>* paragraph [0075] - paragraph [0076] *<br>* paragraph [0098] - paragraph [0100] *<br>----- | 1,10-15 | |
| | | | **TECHNICAL FIELDS SEARCHED (IPC)** |

The present search report has been drawn up for all claims

| Place of search | Date of completion of the search | Examiner |
|---|---|---|
| The Hague | 26 May 2025 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 4 of 4

Europäisches
Patentamt

European
Patent Office

Office européen
des brevets

**Application Number**

EP 24 30 6494

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

```
1. claims: 1, 2, 10, 14, 15

       Using either a spacing between reference signal symbols, or
       a number of reference signal symbols as a parameter.
                          ---

2. claims: 1, 3-10, 14, 15

       Signaling indicating initialization of a procedure is an
       integration of a descriptor in a field dedicated to the
       description and further signaling indicating switch is
       replacement of descriptor.
                          ---

3. claims: 1, 10-15

       Determining one or more long-term characteristic of a
       transmission.
                          ---
```

## ANNEX TO THE EUROPEAN SEARCH REPORT
## ON EUROPEAN PATENT APPLICATION NO.

EP 24 30 6494

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | | Publication date | Patent family member(s) | | | Publication date |
|---|---|---|---|---|---|---|---|
| US 2021306122 | A1 | | 30-09-2021 | CN | 115349239 | A | 15-11-2022 |
| | | | | EP | 4128635 | A1 | 08-02-2023 |
| | | | | US | 2021306122 | A1 | 30-09-2021 |
| | | | | WO | 2021195231 | A1 | 30-09-2021 |
| US 2021112535 | A1 | | 15-04-2021 | CN | 105191464 | A | 23-12-2015 |
| | | | | CN | 109905225 | A | 18-06-2019 |
| | | | | JP | 6385421 | B2 | 05-09-2018 |
| | | | | JP | 2016519485 | A | 30-06-2016 |
| | | | | US | 2016112994 | A1 | 21-04-2016 |
| | | | | US | 2018070338 | A1 | 08-03-2018 |
| | | | | US | 2019007934 | A1 | 03-01-2019 |
| | | | | US | 2020092867 | A1 | 19-03-2020 |
| | | | | US | 2021112535 | A1 | 15-04-2021 |
| | | | | US | 2023107098 | A1 | 06-04-2023 |
| | | | | US | 2024023120 | A1 | 18-01-2024 |
| | | | | WO | 2014161142 | A1 | 09-10-2014 |
| US 2019149300 | A1 | | 16-05-2019 | CN | 104040918 | A | 10-09-2014 |
| | | | | EP | 2777191 | A1 | 17-09-2014 |
| | | | | EP | 3737060 | A1 | 11-11-2020 |
| | | | | JP | 5992530 | B2 | 14-09-2016 |
| | | | | JP | 2015503266 | A | 29-01-2015 |
| | | | | KR | 20130050217 | A | 15-05-2013 |
| | | | | US | 2013114536 | A1 | 09-05-2013 |
| | | | | US | 2016352489 | A1 | 01-12-2016 |
| | | | | US | 2019149300 | A1 | 16-05-2019 |
| | | | | WO | 2013069954 | A1 | 16-05-2013 |
| US 2015282123 | A1 | | 01-10-2015 | CN | 106063180 | A | 26-10-2016 |
| | | | | EP | 3123654 | A1 | 01-02-2017 |
| | | | | JP | 6372724 | B2 | 15-08-2018 |
| | | | | JP | 2017515323 | A | 08-06-2017 |
| | | | | KR | 20160113259 | A | 28-09-2016 |
| | | | | US | 2015282123 | A1 | 01-10-2015 |
| | | | | WO | 2015148041 | A1 | 01-10-2015 |
| US 2019327762 | A1 | | 24-10-2019 | CN | 110313203 | A | 08-10-2019 |
| | | | | US | 2019327762 | A1 | 24-10-2019 |
| | | | | WO | 2018124028 | A1 | 05-07-2018 |

EPO FORM P0459

For more details about this annex : see Official Journal of the European Patent Office, No. 12/82